# EUROPÄISCHE PATENTSCHRIFT

(11) **EP 2 093 039 B1**
(45) Veröffentlichungstag und Bekanntmachung des Hinweises auf die Patenterteilung: **26.10.2011**
(21) Anmeldenummer: 08003169.3
(22) Anmeldetag: 21.02.2008
(51) Int. Cl.: B29C 41/08, B29C 41/18, B29C 41/22

(54) **Verfahren und Vorrichtung zur Herstellung von unterschiedlich Teilbereiche aufweisenden Kunststoff-Formhäuten**
Method and device for manufacturing plastic skins featuring different segments
Procédé et dispositif destinés à la fabrication de peaux en plastique comprenant des éléments partiels différents

(43) Veröffentlichungstag der Anmeldung: 26.08.2009
(73) Patentinhaber: Peguform GmbH, 79268 Bötzingen (DE)
(72) Erfinder: Paulus, Jakob, 93333 Neustadt (DE); Dreger, Ingolf, 93326 Abensberg (DE)
(74) Vertreter: Neunert, Peter Andreas

(56) Entgegenhaltungen:
- WO-A-95/32850
- WO-A-2007/071207
- DE-A1- 3 826 354

## Beschreibung

Die vorliegende Erfindung betrifft ein Verfahren zur Herstellung von unterschiedliche Teilbereiche aufweisenden Kunststoff-Formhäuten nach dem Oberbegriff des Anspruchs 1, sowie eine Vorrichtung zur Herstellung derartiger Kunststoff-Formhäute nach dem Oberbegriff des Anspruchs 11. Die oben genannten Kunststoff-Formhäute sind insbesondere vorgesehen für Innenverkleidungen und Armaturentafeln von Kraftfahrzeugen und weisen Teilbereiche mit unterschiedlichen Eigenschaften, insbesondere unterschiedlichen Farben, auf.

Verfahren zur Herstellung mehrfarbiger Kunststoff-Formhäute mit der sogenannten Maskentechnik sind seit längerem bekannt.

So beschreibt beispielsweise die EP 0 972 625 A1 eine Vorrichtung für das Rotationssintern von Kunststoff-Formhäuten zur Herstellung von Armaturentafeln oder Innenverkleidungen von Kraftfahrzeugen, die im Wesentlichen aus einem beheizbaren Formwerkzeug sowie zwei unterschiedlich ausgerüsteten, zum Formwerkzeug passenden Behältern für Kunststoffpulver besteht, wobei die Behälter nacheinander in zwei unterschiedlichen Arbeitsschritten jeweils in Kombination mit dem Formwerkzeug eingesetzt werden. Dabei weist der erste Pulverbehälter einen schalenförmigen, in den Innenraum des Formwerkzeugs ragenden Vorsprung auf, mit dem ein Teil der Oberfläche des Formwerkzeugs abgedeckt werden kann. Dieser Pulverkasten wird mit einem ersten Kunststoffpulver in einem ersten Arbeitsschritt eingesetzt, wobei das erste Pulver an der freien Oberfläche des erwärmten Formwerkzeugs aufgeschmolzen wird, während der unter der schalenförmigen Abdeckung liegende Bereich der Oberfläche des Formwerkzeugs frei von Pulver bleibt.

Beim zweiten Arbeitsschritt wird dann ein zweiter Pulverkasten eingesetzt, der ein andersfarbiges Pulver beinhaltet und keinen für eine Abdeckung geeigneten Vorsprung mehr aufweist, sodass beim wiederholten Rotationssintern das zweite Pulver an dem vorher freigehaltenen Bereich der Oberfläche des Formwerkzeugs aufschmilzt und dort eine Formhaut in einer anderen Farbe ausbildet, die sich mit der ersten Formhaut zu einer mehrfarbigen Formhaut verbindet.

Problematisch bei dieser Vorrichtung ist der hohe apparative Aufwand insbesondere auch für die Abdichtung der Abdeckung (Maske), wobei besonders bei komplizierten Formen die Gefahr der Undichtigkeit besteht und es zu einem Verwischen der Farbgrenzen kommen kann.

In der DE 10 2005 020 492 A1 und in der DE 10 2005 020 493 A1 werden eine Vorrichtung bzw. ein Verfahren zur Herstellung von mehrfarbigen Kunststoff-Formhäuten beschrieben, insbesondere für Kraftfahrzeugteile, wie z.B. Armaturenbretter oder Türverkleidungen, wobei die Kunststoff-Formhäute im Sinterverfahren durch ein nacheinander erfolgendes, mehrfaches kontinuierliches Anschmelzen von Kunststoffpulvern verschiedener Farbe an einer Oberfläche eines erwärmten Formwerkzeuges aufgebaut werden. Dabei sind die mit Kunststoffpulvern unterschiedlicher Farbe zu versehenden Bereiche der Oberfläche des Formwerkzeugs durch Vorsprünge oder Stege voneinander getrennt. Die Abdeckung oder Maske, die auch in diesem Fall in den Pulverbehälter integriert ist, ist an ihren Randbereichen mit einer Dichtung versehen und liegt mit dieser Dichtung auf den Stegen auf. Zusätzlich wird in den abgedeckten, durch Stege begrenzten Bereichen der Oberfläche ein Überdruck erzeugt. Auf diese Weise ist das Problem der exakten Farbtrennung gelöst, jedoch ist auch in diesem Fall ein relativ hoher apparativer Aufwand erforderlich, insbesondere um die Maske sowie die damit verbundene Energieversorgung zur Verriegelung und Abdichtung der Maske auf der Formwerkzeugoberfläche sowie zur Erzeugung des Überdrucks im maskierten Bereich in einem entsprechenden Pulverkasten zu integrieren.

Als zusätzliches Problem kommt hinzu, dass derartige mit Masken oder zusätzlichen Abdeckungen ausgerüstete Pulverbehälter oder sonstige Gegenstücke für das Formwerkzeug mit einer Reihe von zusätzlichen Kabeln und Schläuchen versehen sind, um die Funktionstüchtigkeit der Maske zu gewährleisten. Diese Kabel- und Schlauchpakete bedingen eine unerwünschte Komplizierung und eine beträchtliche räumliche Einschränkung bei der Produktion.

Es bestand somit weiterhin das Problem, eine Maskierungstechnik für die Herstellung von Teilbereiche mit unterschiedlichen Eigenschaften, insbesondere unterschiedlichen Farben, aufweisenden Kunststoff-Formhäuten zu realisieren, welche die oben geschilderten Nachteile des Standes der Technik nicht aufweist.

Die W09532850 und die W02007071207 offenbaren Zentrierungen bzw. das Anbringen der Maske durch Vakuum, aufblasbare Dichtungen und in Masken integrierte Druckzylinder. Die Oberbegriffe der Ansprüche 1 und 11 gehen von diesen Dokumenten aus.

Die DE3826354 offenbart die Verwendung wiederbeladbarer Druckspeicher, welche in die Werkzeuge von Handhabungsrobotern integriert sind.

Gelöst wird das Problem durch ein Verfahren mit dem Merkmal des Anspruchs 1 sowie eine Vorrichtung mit dem Merkmal des Anspruchs 11. Weitere vorteilhafte Ausführungsformen sowohl des Verfahrens als auch der Vorrichtung sind in den jeweiligen Unteransprüchen wiedergegeben.

Die erfindungswesentliche Idee besteht darin, eine separate Maske für einen Teilbereich einer Formwerkzeugoberfläche vorzusehen, die energieautark ist und mit dem Formwerkzeug bzw. der Formwerkzeugoberfläche selber direkt verbunden werden kann und nicht mehr mit einem Gegenstück kombiniert ist. Dazu müssen zunächst auf der Oberfläche des Formwerkzeugs bzw. in der Maske Einrichtungen vorgesehen sein, mit deren Hilfe die Maske auf der Formwerkzeugoberfläche fixiert und zentriert werden kann. Gleichzeitig müssen in der Maske selber Einrichtungen vorgesehen sein, die Energie für das Ver- und Entriegeln der Maske auf der Formwerkzeugoberfläche sowie für das Abdichten des Maskenrands auf der Formwerkzeugoberfläche liefern. Unter diesen Vorraussetzungen können dann vor dem Aufschmelzen des ersten Kunststoffpulvers ein oder mehrere Bereiche der Oberfläche des Formwerkzeugs durch mindestens eine separate Maske abgedeckt und von Pulvern freigehalten werden.

Bei einer vorteilhaften Ausgestaltung der vorliegenden Erfindung ist die Maske über einen Verriegelungsbolzen mit Hilfe einer auf der Oberfläche des Formwerkzeugs angeordneten Verriegelungsbuchse zentral verriegelt. Die genaue Lage der Maske wird durch zusätzliche Zentrierbolzen fixiert. Dazu ist beispielsweise auf der Formwerkzeugoberfläche mindestens ein zusätzlicher Zentrierbolzen angeordnet ist, der in eine entsprechende Zentrierbuchse in der Maske eingreift. In einer vorteilhaften Ausgestaltung der vorliegenden Erfindung sind mehrere (mindestens zwei) Zentrierbolzen oder Zentrierdome vorgesehen, die eine passgenaue Anordnung der Maske auf der Oberfläche des Formwerkzeugs gewährleisten.

Die oben beschriebenen Einrichtungen zur Fixierung und Zentrierung der Maske auf der Formwerkzeugoberfläche bzw. ihre korrespondierenden Gegenstücke können wechselseitig entweder auf der Formwerkzeugoberfläche oder in der Maske selber angeordnet sein. Das heißt, es sind auch umgekehrte Anordnungen möglich, bei denen der Zentrierbolzen in der Maske integriert ist, während der Verriegelungsbolzen auf der Formwerkzeugoberfläche angeordnet ist, oder beide Bolzenarten auf einer Seite angeordnet sind und die korrespondierenden Buchsen dann auf der jeweils gegenüberliegenden Seite.

Eine vorteilhafte Ausgestaltung der vorliegenden Erfindung sieht vor, dass es sich bei dem Formwerkzeug um einen galvanisch erzeugtes Formwerkzeug handelt, das eine direkt eingalvanisierte Verriegelungsbuchse aus Stahl aufweist. Die Verriegelung der Maske auf der Oberfläche des Formwerkzeugs erfolgt vorteilhaft über einen Verriegelungsbolzen, in dem mit Federn vorgespannte Druckkugeln angeordnet sind, die eine Verriegelung auf einfache Weise in Analogie zu einer Anhängerkupplung ermöglichen. Die Entriegelung der Maske erfolgt in diesem Fall dadurch, dass die mit Federn vorgespannten Druckkugeln mit Hilfe eines im Innern der Maske angeordneten Druckbehälters oder Druckzylinders gelöst werden.

Der erste Schritt des erfindungsgemäßen Verfahrens besteht darin, die Maske auf der Formwerkzeugoberfläche zu fixieren. Nachdem die Maske auf der Oberfläche des Formwerkzeugs verriegelt und zentriert ist, wird der maskierte Bereich am unteren Rand der Maske zur Oberfläche des Formwerkzeugs hin abgedichtet, wobei bei einer vorteilhaften Ausgestaltung der vorliegenden Erfindung an der Maske ein Dichtrand mit Dichtungen aus dauerelastischem und temperaturfestem Kunststoff vorgesehen ist. Eine vorteilhafte Ausgestaltung der Erfindung sieht vor, dass diese Dichtungen mit Hilfe eines ebenfalls im Innern der Maske angeordneten Druckbehälters oder Druckzylinders aufgeblasen werden. Nach der Abdichtung des maskierten Bereiches kann auf den freien Bereichen der Oberfläche des Formwerkzeugs eine erste Formhaut ausgebildet werden.

Die Ausbildung der Formhaut erfolgt vorzugsweise über Rotationssintern oder Sprühsintern.

Beim Rotationssintern wird das Formwerkzeug, vorzugsweise ein sogenanntes "Galvano", mit einem Kunststoffpulverbehälter als unterem Gegenstück verschlossen und die Kunststoff-Formhaut wird bei der Rotation des geschlossenen Werkzeugs auf der beheizten Formwerkzeugoberfläche abgeschieden.

Damit dabei kein Pulver in den maskierten Bereich gelangt, wird der maskierte Bereich abgedichtet. Dazu sind im Randbereich der Maske Dichtungen vorgesehen, die aus einem relativ harten, zugfesten und wärmebeständigem Material, wie zum Beispiel Polyurethan oder Silikonkautschuk, bestehen. Um eine vollständige Abdichtung der Maske zu gewährleisten, werden dehnbare bzw. aufblasbare Dichtungen eingesetzt. Bei einer vorteilhaften Ausführungsform ist vorgesehen, dass das Aufblasen der Dichtungen mittels eines Zeitelementes, das im Innern der Maske integriert ist und mit einem Druckbehälter in Wirkverbindung steht, initiiert wird und die Dichtung erst kurz vor dem eigentlichen Slush-Vorgang, dem Aufschmelzen des Kunststoffs, aufgeblasen wird. Dies hat den enormen Vorteil, dass die Dichtungen erst sehr spät mit der heißen Oberfläche des Formwerkzeugs in Berührung kommen und die Kontaktzeit zwischen Dichtung und Formwerkzeugoberfläche so kurz wie möglich gehalten wird, was die Lebensdauer der Dichtungen deutlich verlängert.

Für das Verfahren bieten sich als vorteilhafte Varianten für aufblasbare Dichtungen zwei unterschiedliche Dichtungstypen an, die beide aus einem dauerelastischen und thermostabilen Kunststoff, wie z.B. Polyurethan oder Silikonkautschuk, bestehen. Bei dem ersten Dichtungstyp ist im unteren Rand der Maske eine Nut ausgebildet, in die eine scharnierartig aufgebaute Gummidichtung eingeklemmt ist. Beim Aufblasen der Dichtung klappen die Scharniere auf und die Gummidichtung tritt aus der Nut heraus und legt sich dicht an die Oberfläche des Formwerkzeugs an.

Beim zweiten Dichtungstyp handelt es sich um einen Dichtring der auf dem Maskenrand angeordnet ist, wobei die Abdichtung durch Aufblasen und die damit verbundene Ausdehnung des Dichtrings erfolgt.

Nachdem über den ersten Arbeitsschritt eine erste Formhaut mit definierten Eigenschaften ausgebildet ist, wird das Formwerkzeug wieder geöffnet und mindestens ein maskierter Teilbereich wird durch Entfernen einer Maske freigelegt. Dieser Teilbereich wird dann in einem zweiten Arbeitsschritt, für den die Pulvervorlage gewechselt wird, mit einem andersartigen Kunststoffpulver beschichtet. Da das "Galvano" zum Abscheiden der zweiten Kunststoffschicht über alle Bereiche gleichmäßig beheizt wird, findet gleichzeitig ein Verbindungsschluss zwischen den beiden, unterschiedliche Eigenschaften aufweisenden Kunststoff-Formhäuten zu einer einzigen Kunststoff-Formhaut statt. Dies setzt voraus, dass es sich bei den Kunststoffen zumindest um verwandte Polymere handelt, die einen vergleichbaren Schmelzpunkt besitzen und sich miteinander bzw. miteinander verschmelzen. Die so erhaltene Kunststoff-Formhaut kann anschließend auf die übliche Weise zu einer Innenverkleidung oder Armaturentafel für ein Kraftfahrzeug weiterverarbeitet werden.

Ursprünglich wurde die Maskentechnik insbesondere für die Herstellung mehrfarbiger Kunststoff-Formhäute eingesetzt. Hierbei wird üblicherweise für beide Farbbereiche der gleiche Basiskunststoff eingesetzt, wobei die Pulvermischungen sich lediglich durch unterschiedliche Farbstoffzusätze unterscheiden. Das erfindungsgemäße Verfahren ist jedoch nicht auf die Herstellung von Kunststoff-Formhäuten mit unterschiedlichen Farbbereichen beschränkt, sondern es kann darüber hinaus eingesetzt werden, um Formhäute zu erhalten, die Teilbereiche mit unterschiedlicher Haptik oder anderen unterschiedlichen physikalischen Eigenschaften aufweisen. Diese Variation kann dadurch erreicht werden, dass den jeweiligen Pulvern unterschiedliche Additive zugesetzt werden oder aber dass unterschiedliche Copolymerisate als Pulver eingesetzt werden, die zwar in ihrem Basispolymer übereinstimmen, so dass sie einen vergleichbaren Schmelzpunkt aufweisen, sich dann aber im jeweiligen Copolymer unterscheiden. Es können natürlich auch chemisch vollkommen unterschiedliche thermoplastische Kunststoffe eingesetzt werden, wenn sie einen vergleichbaren Schmelzpunkt besitzen und sich miteinander verbinden bzw. miteinander verschmelzen.

Das erfindungsgemäße Verfahren ist nicht auf Kunststoff-Formhäute beschränkt, die zwei unterschiedliche Teilbereiche aufweisen, sondern es können durch Anordnung mehrerer autarker Masken auf der Formwerkzeugoberfläche, die dann entweder in mehreren Arbeitsgängen sukzessiv, oder sämtliche im nächsten Arbeitsschritt gleichzeitig entfernt werden, auf den dabei freigelegten Bereichen der Formwerkzeugoberfläche weitere Kunststoffschichten abgeschieden werden, die sich dann zu einer Kunststoff-Formhaut mit mehreren unterschiedlichen Teilbereichen verbinden. Auf diese Weise ist es dann auch möglich, in mehreren Arbeitsgängen, in denen dann jeweils ein andersartiges Kunststoffpulver eingesetzt wird, Kunststoff-Formhäute herzustellen, die mehrere unterschiedliche Teilbereiche aufweisen.

Der besondere Vorteil der vorliegenden Erfindung beruht darauf, dass die jeweilige Maske als energieautarke Maske direkt auf der Oberfläche des Formwerkzeugs angeordnet werden kann und somit keine zusätzlichen Leitungen, Kabel oder Schläuche im Außenbereich des Formwerkzeugs anfallen. Insbesondere beim Slush-Verfahren (Rotationssintern) bedeuten zusätzliche Kabel oder Schläuche im Außenbereich des Formwerkzeugs eine spürbare Komplizierung des Verfahrens und eine räumliche Einschränkung, wobei die Anordnung sämtlicher Kabel und Schläuche außerhalb des Formwerkzeugs auf die Bewegungen des Werkzeugs abgestimmt werden muss und gleichzeitig bei geöffnetem Werkzeug immer ein freier Zugang zum Werkzeuginneren selber möglich sein muss, was angesichts der Vielzahl der Versorgungsleitungen nicht leicht zu realisieren ist.

Durch die Einführung einer energieautarken Maske, die als Volumenkörper ausgebildet ist und in ihrem Inneren Druckzylinder und/oder Druckbehälter aufweist, über die sowohl die Verriegelung als auch die Abdichtung der Masken geregelt werden können, fallen diese Probleme weg, sodass die gesamte Herstellung der Kunststoff-Formhaut auf einfache Weise vollautomatisch über einen Roboter gesteuert werden kann, wobei bspw. die Maske mit Hilfe eines Roboters auf der Oberfläche des Formwerkzeugs angeordnet, dort zentriert und verriegelt wird und anschließend die Formhaut für den ersten Teilbereich auf den freien Bereichen der Oberfläche des Formwerkzeugs ausgebildet wird; nach diesem Arbeitsgang wird das Formwerkzeug wieder geöffnet und die Maske kann per Roboter entfernt und außerhalb des Bereiches des Formwerkzeuges gereinigt werden, wobei gleichzeitig die in der Maske integrierten Druckbehälter wieder aufgefüllt werden.

Das Abdichten und die Verriegelung der Maske wird durch Steuereinheiten innerhalb der Maske geregelt, wobei diese Vorgänge in den gesamten Arbeitsablauf integriert und auf diesen abgestimmt sind, so dass beispielsweise die Verriegelung der Maske direkt beim Aufbringen auf die Formwerkzeugoberfläche mit Hilfe des Roboters erfolgt, während die Abdichtung erst kurz vor dem Slush-Vorgang initiiert wird. Die Entriegelung erfolgt dann wieder im Zusammenspiel mit dem Roboter.

Ein weiterer Vorteil des erfindungsgemäßen Verfahrens besteht darin, dass die Maske als Einzelteil wesentlich einfacher und unkomplizierter gereinigt werden kann als eine Maske oder Abdeckung, die im Pulverbehälter oder in einem sonstigen Gegenstück für das Formwerkzeug integriert ist.

Wie bereits aus der vorangegangenen Beschreibung ersichtlich, ist die erfindungsgemäße Maskierungstechnik besonders vorteilhaft für das Rotationssintern geeignet, kann jedoch auch für das Sprühsintern und jede andere verwandte Technik oder Formgebungsverfahren eingesetzt, bei denen thermoplastische Kunststoffe verarbeitet werden und Oberflächenbereiche des Formwerkzeugs maskiert werden müssen, um die Ausbildung einer Materialschicht an diesen Stellen zunächst zu vermeiden, wobei diese Bereiche dann in einem anschließenden Arbeitsschritt ebenfalls beschichtet werden sollen.

Besonders gut geeignete Kunststoffe für das oben beschriebene erfindungsgemäße Verfahren sind Polyvinylchlorid (PVC) oder thermoplastische Polyurethane (TPU) oder auch Copolymerisate auf Basis von PVC oder Polyurethan.

Im Folgenden wird das erfindungsgemäße Verfahren bzw. die erfindungsgemäße Vorrichtung anhand von Zeichnungen ausführlich erläutert. Dabei zeigen:
- Fig. 1: eine perspektivische Darstellung eines Ausschnittes aus einem Formwerkzeug (Galvano),
- Fig. 2: eine perspektivische Darstellung einer Maske für die erfindungsgemäße Vorrichtung in der Außenan- sicht,
- Fig. 3: eine perspektivische Darstellung der Innenansicht einer Maske,
- Fig. 4: ein Querschnitt einer Maske,
- Fig. 5: die schematische Darstellung einer erfindungsgemä- ßen Vorrichtung für das Rotationsintern und die
- Fig. 6a und 6b: den Querschnitt einer aufblasbaren Dichtung im Ruhezustand bzw. im aufgeblasenen Zustand.

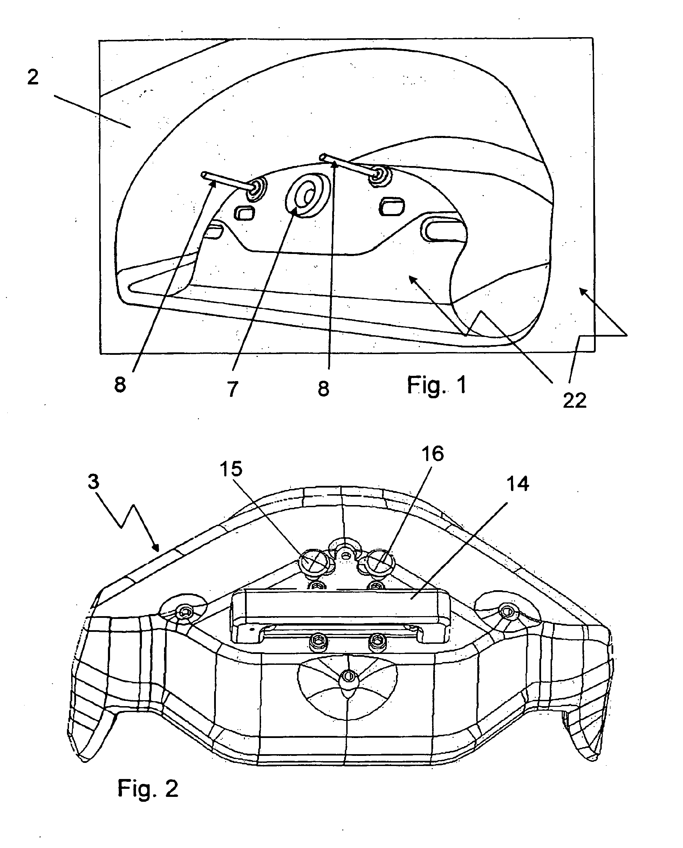

Die Figur 1 zeigt einen Ausschnitt eines Formwerkzeugs 1 für das Slush-Verfahren (Rotationssintern). Dabei handelt es sich um einen Ausschnitt eines Galvanos 22 für die Herstellung von Armaturentafeln, wobei der für die Zeichnung ausgewählte Bereich für die Ausformung der sogenannten Hutze im Bereich des Lenkrads vorgesehen ist. Auf der Oberfläche 2 des Galvanos 22 ist eine eingalvanisierte Verriegelungsbuchse 7 zu erkennen sowie zwei Zentrierbolzen 8, die aus der Oberfläche des Galvanos herausragen. Die Zentrierbolzen 8 sowie die Verriegelungsbuchse 7 sind auf einem Bereich des Galvanos 22 angeordnet, der für die Ausformung der Kunststoff-Formhaut eine untergeordnete Rolle spielt, da der entsprechende Bereich der Formhaut bei der Weiterverarbeitung als Öffnung für eine Instrumentenanzeige ausgestanzt wird.

Die Figur 2 zeigt die Außenansicht einer Maske 3 für das erfindungsgemäße Verfahren. Die Maske 3 ist als nach unten hin offener Volumenkörper ausgebildet, der auf seiner Außenseite einen Griff 14 aufweist sowie zwei Bedienungsknöpfe 15 und 16, die für die manuelle Ver- und Entriegelung bzw. die Abdichtung der Maske vorgesehen sind.

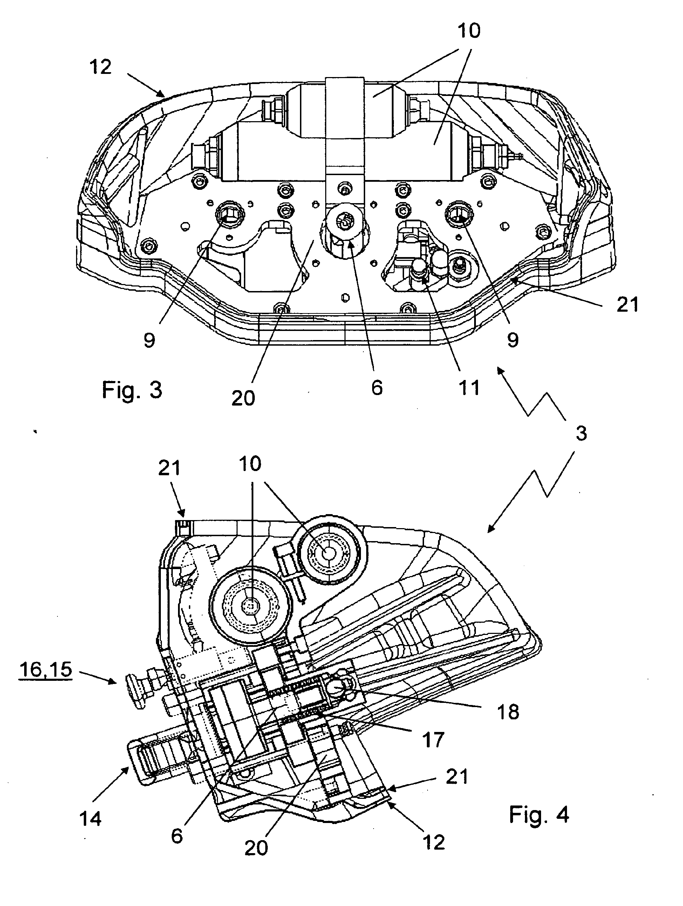

Die Figur 3 zeigt die Innenansicht einer Maske 3, in der ein Träger 20 integriert ist, an dem die meisten Funktionselemente der Maske 3 angeordnet sind. Im Zentrum des Trägers 20 ist der Zentrierbolzen 6 zu erkennen, während in der Peripherie des Trägers Aufnahmebuchsen 9 für die Zentrierbolzen 8 zu erkennen sind. Im Maskeninnern sind als wesentliche Bestandteile zusätzlich zwei Druckzylinder 10 zu sehen, von denen ein Behälter 10 für die Steuerung der Ver- bzw. Entriegelung vorgesehen ist, während der zweite Behälter 10 die Druckluft für das Aufblasen der Dichtungen 13 liefert. Der Maskenrand ist als Dichtrand 12 ausgebildet, der üblicherweise mit einer aufblasbaren Dichtung 13 ausgestattet ist, die in der Nut 21 angeordnet ist, wobei die Dichtung 13 in der vorliegenden Abbildung nicht dargestellt ist.

Die Figur 4 zeigt eine Maske 3 im Querschnitt. Aus dieser Darstellung ist zu erkennen, dass die Anordnung der Einzelfunktionselemente innerhalb der Maske 3 relativ kompakt ist, da für ihre Anordnung naturgemäß nur soviel Platz zur Verfügung gestellt werden kann, wie auch später in der entsprechenden Kavität des Formwerkzeugs 1 angeboten wird. Bei der in Figur 4 aufgezeigten Ausgestaltung der Maske 3 sind als zentrale Funktionselemente die Druckzylinder 10 und der Verriegelungsbolzen 6 zu erkennen. Der größere der beiden Druckzylinder 10 ist für die Ver- und Entriegelung der Maske vorgesehen und ist aus diesem Grunde möglichst nahe zum Verriegelungsbolzen 6 angeordnet. Der zweite Druckzylinder 10 mit dem etwas geringeren Durchmesser ist neben dem größeren Druckluftbehälter 10 in einer rohrschellenartigen Halterung angeordnet und für die Lieferung der Druckluft zum Aufblasen der Dichtringe 13 vorgesehen. In den Verriegelungsbolzen 6 ist eine Feder 17 integriert, mit deren Hilfe die Druckkugeln 18 zum Verriegeln der Maske 3 vorgespannt werden. Der Maskenrand ist als Dichtrand 12 ausgeführt und umfasst eine Nut 21 für die Aufnahme der aufblasbaren Dichtung 13. Der Griff 14 sowie die Bedienungsknöpfe 15, 16 für die Entriegelung bzw. Verriegelung der Maske 3 oder die Abdichtung sind außerhalb der Maske 3 angeordnet. Diese Funktionselemente sind für den manuellen Betrieb der Maske 3 vorgesehen und für den vollautomatischen Betrieb des erfindungsgemäßen Verfahrens bzw. der erfindungsgemäßen Vorrichtung nicht unbedingt erforderlich. Jedoch sollte auch beim vollautomatischen Einsatz der Maske 3 unbedingt eine Eingriffsmoglichkeit zumindest für die Entriegelung der Maske 3 auf der Außenseite der Maske 3 vorgesehen sein, um im Falle einer Betriebsstörung bei Bedarf die Maske 3 von der Formwerkzeugoberflache 2 entfernen zu können.

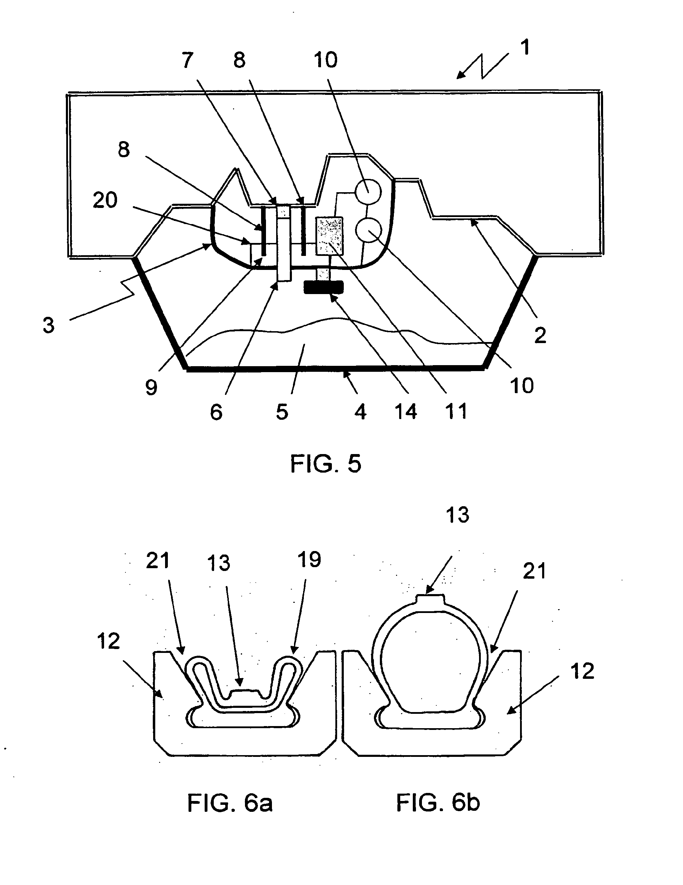

Die Figur 5 zeigt den schematischen Aufbau einer Rotationssinteranlage im Querschnitt. Diese Rotationssinteranlage umfasst eine erfindungsgemäße Vorrichtung zur Herstellung einer unterschiedliche Teilbereiche aufweisenden Formhaut mit einem Formwerkzeug 1 und einer Maske 3 sowie einen Pulverbehälter 4. Ein Bereich der Formwerkzeugoberfläche 2 ist mit der Maske 3 abgedeckt, die über einen Verriegelungsbolzen 6 in einer Verriegelungsbuchse 7 auf der Formwerkzeugoberfläche 2 fixiert ist.

Die Maske 3 ist durch zwei zusätzliche Zentrierbolzen 8, die in Zentrierbuchsen 9 im Träger 20 eingreifen, zentriert. Am Träger 20 sind als zusätzliche Funktionselemente ein Zeitelement 11 sowie zwei Druckzylinder 10 angeordnet. Zusätzlich ist die Maske 3 mit einem Griff 14 für die manuelle Betätigung der Maske 3 ausgerüstet. Der Pulverbehälter 4 deckt die zu beschichtende Formwerkzeugoberfläche 2 ab und ist mit einem Kunststoffpulver 5 beschickt. Beim Rotieren der Rotationssinteranlage fällt das Kunststoffpulver 5 auf die beheizte Formwerkzeugoberfläche 2 und wird dort als Formhaut abgeschieden. Der von der Maske 3 abgedeckte Bereich bleibt zunächst frei. Im zweiten Fertigungsschritt wird dann die Maske 3 entfernt, während die bereits abgeschiedene Formhaut auf der Formwerkzeugoberfläche 2 verbleibt. Der Pulverbehälter 4 wird nun mit einem andersartigen Kunststoffpulver 5 bestückt und im nächsten Rotationssinterschritt wird der nun freie Teilbereich der Formwerkzeugoberfläche 2 ebenfalls mit einem Kunststoff 5 beschichtet. Der zweite Kunststoff 5 weist zwar andere Eigenschaften auf als der erste Kunststoff, ist aber mit dem ersten Kunststoff soweit verwandt, dass er sich zusammen mit diesem zu einer einzigen, unterschiedliche Teilbereiche aufweisenden Formhaut verbindet.

Die Figuren 6a und 6b zeigen eine bevorzugte Ausführungsform des Dichtungsrands 12 der Maske 3. Der Dichtungsrand 12 ist mit einer Nut 21 versehen, in die die Dichtung 13 eingelegt ist, wobei zwischen Dichtung 13 und Nut 21 eine Art Schwalbenschwanzführung ausgebildet wird. Beim Aufblasen klappt die Dichtung 13 um die Scharniere 19 auf und bildet eine reifenartigen Dichtung 13, die sich eng an die Oberfläche 2 des Formwerkzeugs 1 anlegt.

### Bezugszeichenliste

- 1: Formwerkzeug
- 2: Formwerkzeugoberfläche
- 3: Maske
- 4: Pulverbehälter
- 5: Kunststoffpulver
- 6: Verriegelungsbolzen
- 7: Verriegelungsbuchse
- 8: Zentrierbolzen
- 9: Zentrierbuchse
- 10: Druckzylinder
- 11: Zeitelement
- 12: Dichtrand
- 13: Dichtung
- 14: Griff
- 15: Bedienungsknopf (Verriegelung)
- 16: Bedienungsknopf (Abdichtung)
- 17: Feder
- 18: Druckkugel
- 19: Scharnier
- 20: Träger
- 21: Nut
- 22: Galvano

## Patentansprüche

1. Verfahren zur Herstellung von Teilbereiche mit unterschiedlichen Eigenschaften, insbesondere unterschiedliche Farben, aufweisenden Kunststoff-Formhäuten durch nacheinander erfolgendes Aufbringen von verschiedenen Kunststoffen (5) auf eine Oberfläche (2) eines erwärmten Formwerkzeugs (1), wobei
a) vor dem Aufbringen des ersten Kunststoffes (5) mindestens ein Bereich der Oberfläche (2) des Formwerkzeugs (1) mit einer Maske (3) abgedeckt und die Maske (3) verriegelt wird,
b) der mindestens eine maskierte Bereich zwischen Maskenrand (12) und Formwerkzeugoberfläche (2) abgedichtet wird,
c) in einem ersten Formgebungsschritt eine erste Formhaut auf der freien Oberfläche (2) des Formwerkzeugs (1) ausgebildet wird,
d) der Formgebungsprozess anschließend unterbrochen und die mindestens eine Maske (3) entriegelt und entfernt wird und
e) auf dem freigelegten Bereich der Oberfläche (2) des Formwerkzeugs (1) mit einem zweiten, andersartigen Kunststoff (5) in einem zweiten Formgebungsschritt eine zweite Kunststoff-Formhaut ausgebildet wird, wobei sich die Kunststoff-Formhäute zu einer einzigen, Teilbereiche mit unterschiedlichen Eigenschaften aufweisenden Kunststoff-Formhaut verbinden,
**dadurch gekennzeichnet, dass** die Abdichtung des maskierten Bereiches und die Entriegelung der mindestens einen Maske (3) jeweils mit Hilfe mindestens eines im Innern der Maske (3) angeordneten und außerhalb des Formwerkzeugs (1) befüllbaren Druckbehälters (10) erfolgt.

2. Verfahren nach Anspruch 1,
**dadurch gekennzeichnet, dass** die Maske (3) mit Hilfe eines in der Maske (3) angeordneten Verriegelungsbolzens (6) und einer auf der Oberfläche (2) des Formwerkzeugs (1) angeordneten Verriegelungsbuchse (7) zentral verriegelt und mit mindestens einem zusätzlichen, auf dem Formwerkzeug (1) angeordneten Zentrierbolzen (8), der in eine entsprechende Zentrierbuchse (9) in der Maske (3) eingreift, zentriert wird.

3. Verfahren nach Anspruch 1 oder 2,
**dadurch gekennzeichnet, dass** als Formwerkzeug (1) ein galvanisch erzeugtes Formwerkzeug (1) mit einer eingalvanisierten Verriegelungsbuchse (7) aus Stahl eingesetzt wird.

4. Verfahren nach einem der Ansprüche 1 bis 3,
**dadurch gekennzeichnet, dass** die Verriegelung der mindestens einen Maske (3) über im Verriegelungsbolzen (6) angeordnete, mit Federn (17) vorgespannte Druckkugeln (18) erfolgt.

5. Verfahren nach einem der Ansprüche 1 bis 4,
**dadurch gekennzeichnet, dass** die Entriegelung der mindestens einen Maske (3) durch Lösen der mit Federn (17) vorgespannten Druckkugeln (18) über einen im Innern der Maske (3) angeordneten Druckbehälter (10) erfolgt.

6. Verfahren nach einem der Ansprüche 1 bis 5,
**dadurch gekennzeichnet, dass** die Abdichtung des maskierten Bereiches durch Aufblasen von am unteren Rand (12) der Maske angeordneten Dichtungen (13) mit Hilfe eines im Innern der Maske (3) angeordneten Druckbehälter (10) erfolgt.

7. Verfahren nach einem der Ansprüche 1 bis 6,
**dadurch gekennzeichnet, dass** die Abdichtung des maskierten Bereiches über ein im Innern der Maske (3) angeordnetes, pneumatisches Zeitelement (11) gesteuert wird und erst unmittelbar vor dem Formgebungsprozess erfolgt.

8. Verfahren nach einem der Ansprüche 1 bis 7,
**dadurch gekennzeichnet, dass** das Aufbringen und Entfernen der Maske (3) sowie zusätzlich erforderliche Reinigungsschritte vollautomatisch mit Hilfe eines Roboters durchgeführt werden.

9. Verfahren nach einem der Ansprüche 1 bis 8,
**dadurch gekennzeichnet, dass** die Ausbildung der unterschiedliche Teilbereiche aufweisenden Formhäute über Rotationssintern oder Sprühsintern erfolgt.

10. Verfahren nach einem der Ansprüche 1 bis 9,
**dadurch gekennzeichnet, dass** die Ausbildung der unterschiedliche Teilbereiche aufweisenden Formhäute über ein Rotationssinterverfahren erfolgt, wobei jeweils Kunststoffe (5) auf Basis von PVC und/oder TPU in Form eines Pulvers eingesetzt und durch nacheinander erfolgendes Aufschmelzen an der Oberfläche (2) des Formwerkzeugs (1) abgeschieden werden.

11. Vorrichtung zur Herstellung von Teilbereiche mit unterschiedlichen Eigenschaften, insbesondere unterschiedliche Farben, aufweisenden Kunststoff-Formhäuten, umfassend
a) ein aufheizbares Formwerkzeug (1) zur Ausbildung von Kunststoff-Formhäuten durch Aufbringen von Kunststoffen (5) auf eine Oberfläche (2) eines erwärmten Formwerkzeugs (1) und
b) mindestens eine Maske (3) zur Abdeckung eines Bereichs der Oberfläche (2) des Formwerkzeugs (1) vor dem Aufbringen des ersten Kunststoffes (5), wobei das Formwerkzeug (1) an seiner Oberfläche (2) Einrichtungen zur Aufnahme der mindestens einen Maske (3) aufweist und die mindestens eine Maske (3) korrespondierende Einrichtungen zum Verbindungsaufbau mit der Formwerkzeugoberfläche (2) aufweist,
**dadurch gekennzeichnet, dass** im Innern der Maske (3) mindestens ein außerhalb des Formwerkzeugs (1) befüllbarer Druckbehälter (10) zur Abdichtung und zum Entriegeln der Maske (3) vorgesehen ist.

12. Vorrichtung nach Anspruch 11,
**dadurch gekennzeichnet, dass** auf der Oberfläche (2) des Formwerkzeugs (1) mindestens eine Verriegelungsbuchse (7) zur zentralen Verriegelung der Maske (3) und mindestens ein Zentrierbolzen (6) zur Zentrierung der Maske (3) angeordnet ist.

13. Vorrichtung nach Anspruch 11 oder 12,
**dadurch gekennzeichnet, dass** das Formwerkzeug (1) ein galvanisch erzeugtes Formwerkzeug (1) mit einer eingalvanisierten Verriegelungsbuchse (7) aus Stahl ist.

14. Vorrichtung nach einem der Ansprüche 11 bis 13,
**dadurch gekennzeichnet, dass** in der Maske (3)
- ein verriegelungsbolzen (6) zur Verriegelung der Maske (3) auf der Formwerkzeugoberfläche (2),
- mindestens eine Zentrierbuchse (7) zur Aufnahme des mindestens einen Zentrierbolzens (6),
- mindestens ein Druckbehälter (10) und
- ein Zeitelement (11)
angeordnet sind.

15. Vorrichtung nach einem der Ansprüche 11 bis 14,
**dadurch gekennzeichnet, dass** zur Verriegelung der Maske (3) im Verriegelungsbolzen (6) angeordnete, mit Federn (17) vorgespannte Druckkugeln (18) vorgesehen sind.

16. Vorrichtung nach einem der Ansprüche 11 bis 15,
**dadurch gekennzeichnet, dass** der im Innern der Maske (3) mindestens eine angeordnete Druckzbehälter (10) zur Entriegelung der Maske (3) und zum Lösen der mit Federn (17) vorgespannten Druckkugeln (18) vorgesehen ist.

17. Vorrichtung nach einem der Ansprüche 11 bis 16,
**dadurch gekennzeichnet, dass** zur Abdichtung des maskierten Bereiches am Rand (12) der Maske (3) angeordnete, mit Hilfe des im Innern der Maske (3) angeordneten Druckbehälters (10) aufblasbare Dichtungen (13) vorgesehen sind.

18. Vorrichtung nach einem der Ansprüche 11 bis 17,
**dadurch gekennzeichnet, dass** die aufblasbare Dichtung (13) aus dauerelastischem und temperaturfestem Material, wie z.B. Polyurethan oder Silikonkautschuk, besteht.

19. Vorrichtung nach einem der Ansprüche 11 bis 18,
**dadurch gekennzeichnet, dass** im Innern der Maske (3) ein pneumatisches Zeitelement (11) zur Steuerung der Abdichtung des maskierten Bereiches vorgesehen ist.

20. Vorrichtung nach einem der Ansprüche 11 bis 19,
**dadurch gekennzeichnet, dass** für das Verriegeln und das Abdichten der Maske (3) zwei separate Druckbehälter (10) im Innern der Maske (3) vorgesehen sind.

21. Vorrichtung nach einem der Ansprüche 11 bis 20,
**dadurch gekennzeichnet, dass** die Vorrichtung für das Sprühsintern und/oder Rotationssintern von Kunststoff-Formhäuten einsetzbar ist.

22. Vorrichtung nach einem der Ansprüche 11 bis 21,
**dadurch gekennzeichnet, dass** die Vorrichtung für das Rotationssintern von Kunststoff-Formhäuten unter Einsatz von Kunststoffpulvern auf Basis von PVC oder TPU vorgesehen ist.

## Claims

1. A method of producing moulded skins of plastics material having partial areas with different properties, in particular different colours, by the successive application of different plastics materials (5) to a surface (2) of a heated moulding tool (1), wherein
a) before the application of the first plastics material (5) at least one region of the surface (2) of the moulding tool (1) is covered with a mask (3) and the mask (3) is locked,
b) the at least one masked region between the edge (12) of the mask and the surface (2) of the moulding tool is sealed off,
c) in a first moulding step a first moulded skin is formed on the free surface (2) of the moulding tool (1),
d) the shaping process is then interrupted and the at least one mask (3) is unlocked and removed, and
e) in a second moulding step a second moulded skin of plastics material is formed on the exposed region of the surface (2) of the moulding tool (1) with a second plastics material (5) of a different type, wherein the moulded skins of plastics material are joined to form a single moulded skin of plastics material having partial areas with different properties,
**characterized in that** the sealing of the masked region and the unlocking of the at least one mask (3) is carried out in each case with the aid of at least one pressure tank (10) arranged in the interior of the mask (3) and capable of being filled outside the moulding tool (1).

2. A method according to claim 1, **characterized in that** the mask (3) is locked centrally with the aid of a locking pin (6) arranged in the mask (3) and a locking sleeve (7) arranged on the surface (2) of the moulding tool (1) and is centred with at least one additional centring pin (8) which is arranged on the moulding tool (1) and which engages in a corresponding centring sleeve (9) in the mask (3).

3. A method according to claim 1 or 2, **characterized in that** the moulding tool (1) used is in the form of a moulding tool (1) produced galvanically and with a locking sleeve (7) of steel also galvanized in.

4. A method according to any one of claims 1 to 3, **characterized in that** the locking of the at least one mask (3) is carried out by way of thrust spheres (18) arranged in the locking pin (6) and pre-stressed by springs (17).

5. A method according to any one of claims 1 to 4, **characterized in that** the unlocking of the at least one mask (3) is carried out by releasing the thrust spheres (18) pre-stressed by springs (17) by way of a pressure tank (10) arranged in the interior of the mask (3).

6. A method according to any one of claims 1 to 5, **characterized in that** the sealing of the masked region is carried out by inflating seals (13) arranged on the lower edge (12) of the mask with the aid of a pressure tank (10) arranged in the interior of the mask (3).

7. A method according to any one of claims 1 to 6, **characterized in that** the sealing of the masked region is controlled by way of a pneumatic time element (11) arranged in the interior of the mask (3) and takes place only immediately before the shaping process.

8. A method according to any one of claims 1 to 7, **characterized in that** the application and removal of the mask (3) and additional cleaning steps which are necessary are carried out fully automatically with the aid of a robot.

9. A method according to any one of claims 1 to 8, **characterized in that** the moulded skins having different partial areas are formed by way of rotation sintering or spray sintering.

10. A method according to any one of claims 1 to 9, **characterized in that** the moulded skins having different partial areas are formed by way of a rotation sintering method, wherein plastics materials (5) based upon PVC and/or TPU are used in the form of a powder in each case and are deposited on the surface (2) of the moulding tool (1) by melting on which is carried out in succession.

11. An apparatus for producing moulded skins of plastics material having partial areas with different properties, in particular different colours, comprising
a) a moulding tool (1) capable of being heated for the formation of moulded skins of plastics material by the application of plastics materials (5) to a surface (2) of a heated moulding tool (1), and
b) at least one mask (3) for covering a region of the surface (2) of the moulding tool (1) before the application of the first plastics material (5), wherein
on its surface (2) the moulding tool (1) has devices for receiving the at least one mask (3), and the at least one mask (3) has corresponding devices for the connecting structure with the moulding tool surface (2),
**characterized in that** at least one pressure tank (10) capable of being filled outside the moulding tool (1) for sealing off and unlocking the mask (3) is provided in the interior of the mask (3).

12. An apparatus according to claim 11, **characterized in that** at least one locking sleeve (7) for the central locking of the mask (3) and at least one centring pin (6) [sic] for centring the mask (3) are arranged on the surface (2) of the moulding tool (1).

13. An apparatus according to claim 11 or 12, **characterized in that** the moulding tool (1) is a moulding tool (1) produced galvanically and with a locking sleeve (7) of steel galvanized in.

14. An apparatus according to any one of claims 11 to 13, **characterized in that**
- a locking pin (6) for locking the mask (3) on the surface (2) of the moulding tool,
- at least one centring sleeve (7) [sic] for receiving the at least one centring pin (6) [sic],
- at least one pressure tank (10) and
- a time element (11)
are arranged in the mask (3).

15. An apparatus according to any one of claims 11 to 14, **characterized in that** in order to lock the mask (3) thrust spheres (18) arranged in the locking pin (6) and pre-stressed by springs (17) are provided.

16. An apparatus according to any one of claims 11 to 15, **characterized in that** the at least one pressure tank (10) arranged in the interior of the mask (3) is provided for unlocking the mask (3) and for releasing the thrust spheres (18) pre-stressed by springs (17).

17. An apparatus according to any one of claims 11 to 16, **characterized in that** in order to seal off the masked region seals (13) arranged on the edge (12) of the mask (3) and inflatable with the aid of the pressure tank (10) arranged in the interior of the mask (3) are provided.

18. An apparatus according to any one of claims 11 to 17, **characterized in that** the inflatable seal (13) consists of permanently elastic and temperature-resistant material, such as for example polyurethane or silicone rubber.

19. An apparatus according to any one of claims 11 to 18, **characterized in that** a pneumatic time element (11) for controlling the sealing of the masked region is provided in the interior of the mask (3).

20. An apparatus according to any one of claims 11 to 19, **characterized in that** two separate pressure tanks (10) are provided in the interior of the mask (3) for locking and sealing off the mask (3).

21. An apparatus according to any one of claims 11 to 20, **characterized in that** the apparatus is capable of being used for the spray sintering and/or rotation sintering of moulded skins of plastics material.

22. An apparatus according to any one of claims 11 to 21, **characterized in that** the apparatus is provided for the rotation sintering of moulded skins of plastics material whilst using plastics material powders on the basis of PVC or TPU.

## Revendications

1. Procédé d'obtention de peaux de cuisson en matière plastique présentant des zones partielles ayant des propriétés différentes, en particulier des couleurs différentes par applications successives de différentes matières plastiques (5) sur la surface (2) d'un outil de moulage (1) chauffé selon lequel :
a) avant l'application de la première matière plastique (5) on recouvre au moins une zone de la surface (2) de l'outil de moulage (1) d'un masque (3) et on bloque ce masque (3),
b) on rend étanche la ou les zone(s) masquée(s) entre le bord du masque (12) et la surface (2) de l'outil de moulage,
c) dans une première étape de mise en forme, on forme une première peau de cuisson sur la surface libre (2) de l'outil de moulage (1),
d) on interrompt ensuite le procédé de mise en forme et on débloque et enlève le ou les masque(s) (3), et
e) sur la zone libérée de la surface (2) de l'outil de moulage (1) on forme une seconde peau de cuisson en matière plastique, dans une seconde étape de mise en forme, avec une seconde matière plastique (5) différente de la première, les peaux de cuisson en matière plastique se joignant de manière à former une seule peau de cuisson en matière plastique présentant des zones partielles ayant des caractéristiques différentes,
**caractérisé en ce que**
l'étanchéification de la zone masquée et le déblocage du ou des masque(s) (3) s'effectuent à chaque fois à l'aide d'au moins un réservoir sous pression disposé à l'intérieur du masque (3) et pouvant être rempli à l'extérieur de l'outil de moulage.

2. Procédé conforme à la revendication 1,
**caractérisé en ce que**
le masque (3) est bloqué dans une position centrale à l'aide d'un boulon de blocage (6) monté dans le masque (3) et d'une douille de blocage (7) montée sur la surface (2) de l'outil de moulage (1) et est centré à l'aide d'au moins un boulon de centrage (8) supplémentaire monté sur l'outil de moulage (1) et qui vient en prise dans le masque (3) dans une douille de centrage correspondante.

3. Procédé conforme à la revendication 1 ou 2,
**caractérisé en ce qu'**
en tant qu'outil de moulage (1) on met en oeuvre un outil de moulage (1) obtenu par galvanisation équipé d'une douille de blocage (7) en acier galvanisée.

4. Procédé conforme à l'une des revendications 1 à 3,
**caractérisé en ce que**
le blocage du ou des masque(s) (3) s'effectue à l'aide de billes de pression (18) précontraintes par des ressorts (17) montées dans le boulon de blocage (6).

5. Procédé conforme à l'une des revendications 1 à 4,
**caractérisé en ce que**
le déblocage du ou des masque(s) (3) s'effectue en relâchant les billes de pression (18) précontraintes par des ressorts (17) à l'aide d'un réservoir sous pression (10) monté à l'intérieur du masque (3).

6. Procédé conforme à l'une des revendications 1 à 5,
**caractérisé en ce que**
l'étanchéification de la zone masquée s'effectue par gonflement par soufflage de garnitures d'étanchéité (13) situées sur le bord inférieur (12) du masque à l'aide d'un réservoir sous pression (10) monté à l'intérieur du masque (3).

7. Procédé conforme à l'une des revendications 1 à 6,
**caractérisé en ce que**
l'étanchéification de la zone masquée est commandée par l'intermédiaire d'un élément de temporisation pneumatique monté à l'intérieur du masque (3) et n'est effectuée qu'immédiatement avant la mise en oeuvre du procédé de mise en forme.

8. Procédé conforme à l'une des revendications 1 à 7,
**caractérisé en ce que**
l'application et l'enlèvement du masque (3) ainsi que des étapes de nettoyage complémentaires nécessaires sont mise en oeuvre de façon totalement automatique à l'aide d'un robot.

9. Procédé conforme à l'une des revendications 1 à 8,
**caractérisé en ce que**
la formation des peaux de cuisson présentant des zones partielles différentes est effectuée par frittage par centrifugation ou par frittage par pulvérisation.

10. Procédé conforme à l'une des revendications 1 à 9,
**caractérisé en ce que**
la formation des peaux de cuisson présentant des zones partielles différentes s'effectue par un procédé de frittage par centrifugation, des matières plastiques (5) à base de PVC et/ou de TPU étant respectivement mises en oeuvre sous la forme d'une poudre et étant déposées sur la surface (2) de l'outil de moulage (1) par fusion s'effectuant successivement.

11. Dispositif d'obtention de peaux de cuisson en matière plastique présentant des zones partielles ayant des caractéristiques différentes, en particulier des couleurs différentes comportant :
a) un outil de moulage (1) pouvant être chauffé pour permettre de former des peaux de cuisson en matière plastique par application de matières plastiques (5) sur une surface (2) de cet outil de moulage (1) chauffé, et
b) au moins un masque (3) pour recouvrir une zone de la surface (2) de l'outil de moulage (1) avant l'application de la première matière plastique (5), l'outil de moulage (1) étant équipé sur sa surface (2) de dispositifs de réception du ou des masque(s), et le ou les masque(s) (3) étant équipé(s) de dispositifs correspondant pour permettre l'obtention d'une liaison avec la surface de l'outil de moulage (2),
**caractérisé en ce qu'**
il est prévu, à l'intérieur du masque (3) au moins un réservoir sous pression (10) pouvant être rempli à l'extérieur de l'outil de moulage (1) pour permettre rendre étanche et de débloquer le masque (3).

12. Dispositif conforme à la revendication 11,
**caractérisé en ce qu'**
au moins une douille de blocage (7) pour permettre le blocage central du masque (3) dans une positon centrale et au moins un boulon de centrage (6) pour permettre de centrer le masque (3) sont montés sur la surface (2) de l'outil de moulage (1).

13. Dispositif conforme à la revendication 11 ou 12,
**caractérisé en ce que**
l'outil de moulage (1) est un outil de moulage (1) obtenu par galvanisation muni d'une douille de blocage (7) en acier galvanisée.

14. Dispositif conforme à l'une des revendications 11 à 13,
**caractérisé en ce que**
dans le masque (3) sont montés :
- un boulon de blocage (6) pour permettre de bloquer le masque (3) sur la surface (2) de l'outil de moulage,
- au moins une douille de centrage pour permettre la réception du ou des boulon(s) de centrage (6),
- au moins un réservoir sous pression (10), et
- un élément de temporisation (11).

15. Dispositif conforme à l'une des revendications 11 à 14,
**caractérisé en ce que**
pour bloquer le masque (3), il est prévu des billes de pression (18) montées dans le boulon de blocage (6) et précontraintes par des ressorts (17).

16. Dispositif conforme à l'une des revendications 11 à 15,
**caractérisé en ce que**
le ou les réservoir(s) sous pression (10) monté(s) à l'intérieur du masque (3) est (sont) prévu(s) pour débloquer le masque (3) et pour relacher les billes de pression (18) précontraintes par des ressorts (17).

17. Dispositif conforme à l'une des revendications 11 à 16,
**caractérisé en ce que**
pour permettre l'étanchéification de la zone masquée, il est prévu des garnitures d'étanchéité (13) situées sur le bord (12) du masque (3), et pouvant être gonflées par soufflage à l'aide du réservoir sous pression (10) monté à l'intérieur du masque (3).

18. Dispositif conforme à l'une des revendications 11 à 17,
**caractérisé en ce que**
la garniture d'étanchéité (13) pouvant être gonflée par soufflage est réalisée en un matériau à élasticité permanente et résistant à la température tel que par exemple le polyuréthane ou le caoutchouc au silicone.

19. Dispositif conforme à l'une des revendications 11 à 18,
**caractérisé en ce qu'**
il est prévu à l'intérieur du masque (3) un élément de temporisation pneumatique (11) pour commander l'étanchéification de la zone masquée.

20. Dispositif conforme à l'une des revendications 11 à 19,
**caractérisé en ce que**
pour le déblocage et l'étanchéification du masque (3) il est prévu deux réservoirs sous pression séparés (10) à l'intérieur du masque (3).

21. Dispositif conforme à l'une des revendications 11 à 20,
**caractérisé en ce qu'**
un dispositif de frittage par pulvérisation et/ou de frittage par centrifugation de peaux de cuisson en matière plastique peut être mis en oeuvre.

22. Dispositif conforme à l'une des revendications 11 à 21,
**caractérisé en ce qu'**
le dispositif de frittage par pulvérisation de peaux de cuisson en matière plastique est prévu pour la mise en oeuvre de poudres de matière plastique à base de PVC ou de TPU.
